# EUROPEAN PATENT APPLICATION

(11) **EP 2 578 878 A1**
(43) Date of publication of application: **10.04.2013**
(21) Application number: 11789135.8
(22) Date of filing: 22.05.2011
(51) Int. Cl.: F03D 7/04

(54) **DOWNWIND VARIABLE PITCH WIND MOTOR**

(30) Priority: 04.06.2010 CN 201010191997
(71) Applicant: Zhejiang Huaying Wind Power Generator Co., Ltd, Zhejiang 314500 (CN)
(72) Inventor: XU, Xuegen, Zhejiang 314500 (CN); YU, Kai, Zhejiang 314500 (CN); HE, Guorong, Zhejiang 314500 (CN)
(74) Representative: Decamps, Alain René François
(86) International application number: PCT/CN2011/074483
(87) International publication number: WO 2011/150756

(57) **Abstract**

The invention designs a downwind variable pitch wind turbine generator suitable for medium and small-sized propellers comprising a wheel hub (1), a main shaft (4), a generator (8), a frame (10) and a base (12), wherein a synchronizing disc (15) is arranged in the wheel hub (1), the synchronizing disc (15) is connected to a propeller blade connection slewing bearing (17) through two joint bearings (13) which are in mutual butt joint, one end of a reciprocating rod (14) arranged in the main shaft (4) is connected with the synchronizing disc (15), the other end of the reciprocating rod is connected to a displacement sleeve (5), an electric push rod (18) is arranged in the frame (10), and the displacement sleeve (5) is connected to the electric push rod (18).

## Description

### Technical Field

The invention relates to the field of wind turbine generators, in particular to a downwind wind turbine generator suitable for medium and small-sized propellers.

### Background of the Invention

Currently, most large propellers use variable-pitch and variable-speed regulation thus showing advantages such as a stable power output and reliable operating of the propellers, while for small propellers, as the blades are smaller and generate a lower force under the action of the wind, said small propellers cannot enable the centrifugal hammers to twist and thus cannot achieve the variable control effect. As consequence, most wind turbine generators with small propellers comprise a stern rudder yawing in upwind. However, not only the output is unstable, but also failures and problems due to a poor speed-limiting effect of the propellers under strong wind conditions are more important and operating is unreliable.

### Summary of the Invention

It is an object of the present invention to provide a downward variable pitch wind turbine generator having a simple structure, a high efficiency and reliability to solve the above mentioned technical drawbacks.

To achieve these objectives, the downwind variable pitch wind turbine generator of the invention comprises a wheel hub (1), a main shaft (4), a generator (8), a frame (10) and a base (12), wherein a synchronizing disc (15) is arranged in the wheel hub (1), the synchronizing disc (15) is connected to a propeller blade connection slewing bearing (17) through two joint bearings (13) which are in mutual butt joint, a reciprocating rod (14) connected with a sliding pair is arranged in the main shaft (4), one end of the reciprocating rod (14) is connected to the synchronizing disc (15) and the other end of the reciprocating rod (14) is connected to a displacement sleeve (5), an electric push rod (18) is arranged in the frame (10), the displacement sleeve (5) is connected to the electric push rod (18), and the electric push rod (18) is electrically connected to a signal sliding ring (20) mounted in the base (12). Therefore, the downwind variable pitch wind turbine generator can quickly react and additionally provide the effects of the pitch control and shutdown.

The wheel hub (1) is connected to the main shaft (4) through a connecting flange (9), the main shaft (4) is connected with a main bearing seat (2) and an auxiliary bearing seat (6) through a self-aligning roller bearing (3) and fixed on the frame (12) through an elastic support block (16) and the main shaft (4) is connected to a generator (8) through an elastic shaft coupling (7). The structure is compact, and the operation is smoother and more reliable.

A slewing bearing (11) is arranged between the frame (10) and the base (12), and a power transmission sliding ring (19) is arranged in the base (12). The frame (10) can rotate at 360 degrees relative to the base (12) so as to adapt to any wind directions.

The downward variable pitch wind turbine generator according to the invention is suitable for medium and small-sized propellers, the main body is simple and compact in structure, safe and reliable. The downward variable pitch wind turbine generator is provided with the elastic support block (16) so that deflection and vibration caused by the rotation of a wind wheel cannot be transferred to the generator (8) and the frame (10) in a rigid manner and the operation is smoother and more reliable. A pitch control mechanism of the downward variable pitch wind turbine generator can control three blades to simultaneously change the pitch and keep the pitch-changing amplitude consistent. The pitch control mechanism can enable each blade to change the pitch to a certain negative angle, allowing the shutdown of the downward variable pitch wind turbine generator and maintain the shutdown state even under harsh conditions, such as hurricane and the like. The frame (10) can rotate at 360 degrees relative to the base (12) so as to adapt to all wind directions. In addition, the downwind variable pitch wind turbine generator is further provided with an anemometer and a controller, so that the reaction is more sensitive, the downwind variable pitch wind turbine generator is suitable for any wind direction, wind speed, or sudden wind conditions change, the effects are an improved efficiency also, the wind turbines can be operated in a wider range of regions.

### Brief Description of the Drawings

Figure 1 is a sectional view of the invention.
Figure 2 is a front view of the embodiment of the invention.
Figure 3 is a lateral view of the embodiment of the invention.

Wheel hub (1); bearing seat of main shaft (2); self-aligning roller bearing (3); main shaft (4); displacement sleeve (5); auxiliary bearing seat (6); elastic shaft coupling (7); generator (8); connecting flange (9); frame (10); slewing bearing (11); base (12); joint bearing (13); reciprocating rod (14) ; synchronizing disc (15) ; elastic support block (16) ; propeller blade connection slewing bearing (17); electric push rod (18); power transmission sliding ring (19) ; signal sliding ring (20).

### Detailed Description of Preferred Embodiments

The invention is further described in combination with the following embodiments and figures.

### Embodiment 1:

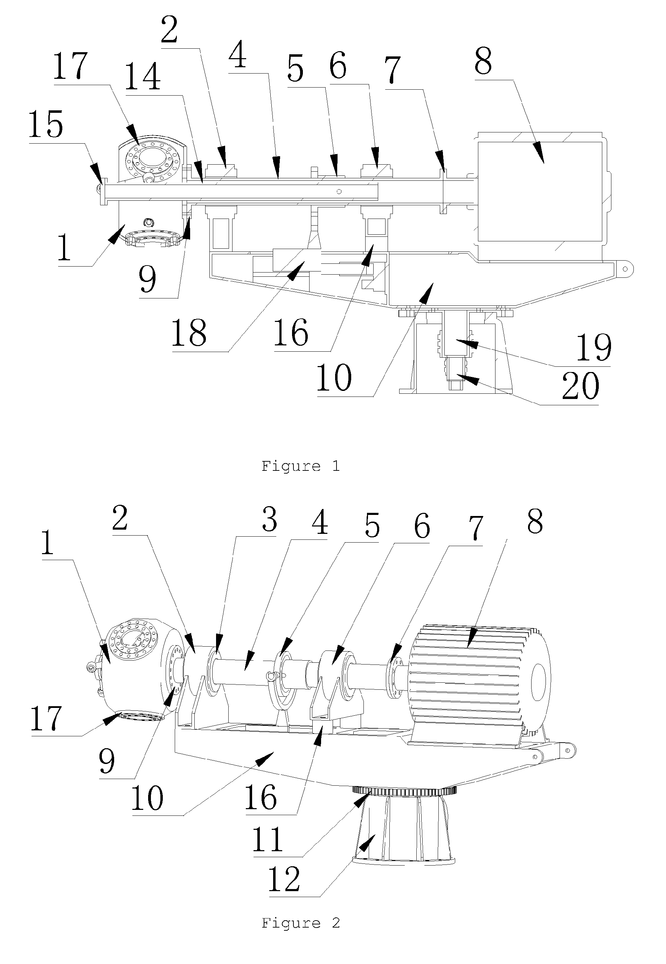

As shown in Figure 1, a downwind variable pitch wind turbine generator described by the embodiment comprises a wheel hub (1), a main shaft (4), a generator (8), a frame (10) and a base (12), wherein a synchronizing disc (15) is arranged in the wheel hub (1), the synchronizing disc (15) is connected to a propeller blade connection slewing bearing (17) through two joint bearings (13) which are in mutual butt joint, a reciprocating rod (14) connected with a sliding pair is arranged in the main shaft (4), one end of the reciprocating rod (14) is connected to the synchronizing disc (15), the other end of the reciprocating rod (14) is connected to a displacement sleeve (5), an electric push rod (18) is arranged in the frame (10), the displacement sleeve (5) is connected to the electric push rod (18), and the electric push rod (18) is electrically connected to a signal sliding ring (20) mounted in the base (12).

When the anemometer monitors important wind speed conditions, the controller can send a signal to command the electric push rod (18) to expand or contract, then the electric push rod (18) can draw the displacement sleeve (5) to move, the synchronizing disc (15) can be driven to move through the reciprocating rod (14) and the joint bearings (13) on the synchronizing disc (15) can further draw the propeller blade connection slewing bearing (17) to rotate for realizing the pitch control of propeller blades. When hurricane or abnormal situations are detected and require the shutdown of the propeller, the controller can send a signal to trigger the pitch control mechanism to work realizing the pitch control of the propeller blades and when the pitch is changed to a certain negative angle, the wind can give a reverse force to the propeller. To stop the propeller the force is lower than the force required to start the propeller, so that the propeller is prevented from running in reverse direction and the propeller can remain in its shutdown state.

### Embodiment 2:

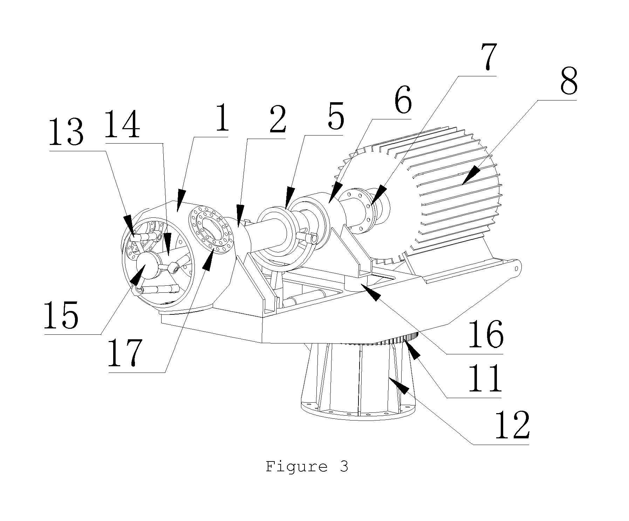

As shown in Figure 2 and Figure 3, in a downwind variable pitch wind turbine generator described by the embodiment, the wheel hub (1) is connected to the main shaft (4) through the connecting flange (9), the main shaft (4) is connected to the main bearing seat (2) and the auxiliary bearing seat (6) through the self-aligning roller bearing (3) and fixed on the frame (10) through the elastic support block (16), the main shaft (4) is connected to the generator (8) through the elastic shaft coupling (7), the slewing bearing (11) is arranged between the frame (10) and the base (12), and the power transmission sliding ring (19) is arranged in the base (12). The frame (10) can rotate at 360 degrees, the control signal of the electric push rod (18) and the power supply are transmitted by relying on the signal sliding ring (20), and power generated by the generator (8) is transmitted to the outside by relying on the power transmission sliding ring (19).

## Claims

1. A downwind variable pitch wind turbine generator mainly comprising a wheel hub (1), a main shaft (4), a generator (8), a frame (10) and a base (12), **characterized in that** a synchronizing disc (15) is arranged in the wheel hub (1), the synchronizing disc (15) is connected to a propeller blade connection slewing bearing (17) through two joint bearings (13) which are in mutual butt joint, a reciprocating rod (14) connected to a sliding pair is arranged in the main shaft (4), one end of the reciprocating rod (14) is connected to the synchronizing disc (15), the other end of the reciprocating rod (14) is connected to a displacement sleeve (5), an electric push rod (18) is arranged in the frame (10), the displacement sleeve (5) is connected with the electric push rod (18), and the electric push rod (18) is electrically connected with a signal sliding ring (20) mounted in the base (12).

2. The downwind variable pitch wind turbine generator according to claim 1, **characterized in that** the wheel hub (1) is connected to the main shaft through a connecting flange (9), the main shaft (4) is connected with a main bearing seat (2) and an auxiliary bearing seat (6) through a self-aligning roller bearing (3) and fixed on the frame (10) through an elastic support block (16) and the main shaft (4) is connected with the generator (8) through an elastic shaft coupling (7).

3. The downwind variable pitch wind turbine generator according to claim 1 or 2, **characterized in that** a slewing bearing (11) is arranged between the frame (10) and the base (12), and a power transmission sliding ring (19) is arranged in the base (12).
